# EUROPEAN PATENT APPLICATION

(11) **EP 4 683 417 A1**
(43) Date of publication of application: **21.01.2026**
(21) Application number: 23926748.7
(22) Date of filing: 14.03.2023
(51) Int. Cl.: H04W 72/25

(54) **SIDELINK TRANSMISSION METHOD AND APPARATUS THEREFOR**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2023/081476
(87) International publication number: WO 2024/187390

(57) **Abstract**

Disclosed in the embodiments of the present application are a sidelink transmission method and an apparatus therefor. The method comprises: a first terminal determining the first terminal to be a response terminal; the first terminal determining, during a logical channel prioritization (LCP) process, a second terminal to be a target receiving terminal of a data packet, wherein the second terminal is an initiating terminal of a shared COT; and the first terminal sending the data packet to the second terminal by using the shared COT. By means of implementing the embodiments of the present application, performing LCP of a COT can be supported when a response terminal of a shared COT sends data to an initiating terminal, such that when the response terminal sends a data packet by using the shared COT, it can be ensured that a receiving terminal of the data packet is the initiating terminal of the shared COT, and the problem of how to use, in a Sidelink-U (sidelink-unlicensed) scenario, a shared COT for transmission is solved.

## Description

### TECHNICAL FIELD

The present disclosure relates to the field of communication technologies, and in particular to a sidelink transmission method and apparatus.

### BACKGROUND

In order to support direct communication between terminals, a direct communication (also called sidelink (SL)) communication mode is introduced, and an interface between the terminals is PC-5. Based on a correspondence relationship between the sending and receiving terminals, three transmission modes are supported on the sidelink, such as unicasting, multicasting, and broadcasting.

For a sidelink of R18, it supports operating in an unlicensed frequency band or frequency spectrum. The sidelink may utilize the unlicensed frequency band or frequency spectrum for communication. The unlicensed frequency band or frequency spectrum is open and can be effectively utilized to improve performance and speed. Communication apparatuses may communicate on unlicensed frequency band resources obtained through contention.

Channel occupancy time (COT) sharing is a character currently under discussion of R18. It allows a terminal performing type-1 listen before talk (LBT) to contend for the COT for sharing with another terminal. The terminal that initiates the shared COT is called a COT initiating terminal, and the terminal that uses the shared COT is called a responding terminal or a target terminal. For example, when the responding terminal is a target receiving terminal for the COT initiating terminal, the responding terminal may share the COT.

However, there is currently no effective means for using shared COT transmission in a Sidelink-Unlicensed (Sidelink-U) scenario.

### SUMMARY

Embodiments of the present disclosure provide a sidelink transmission method and apparatus, which are applicable to an Internet of Vehicles, such as a vehicle-to-everything (V2X) communication, a long-term evolution-vehicle (LTE-V) communication, a vehicle-to-vehicle (V2V) communication, etc., or can be used in the fields of intelligent driving, intelligent connected vehicles, etc. By determining an initiating terminal for a shared channel occupancy time (COT) as a target receiving terminal of a data packet in the logical channel prioritization (LCP) procedure through a responding terminal for the shared COT. This can support the LCP for the COT when the responding terminal for the shared COT sends data to the initiating terminal, so that when the responding terminal uses the shared COT for sending the data packet, which ensures that the receiving terminal of the data packet is the initiating terminal for the shared COT, thereby solving the problem of how to use the shared COT transmission in the Sidelink-U scenario.

In a first aspect, embodiments of the present disclosure provide a sidelink transmission method. The method is performed by a first terminal, and the method includes:
determining the first terminal as a responding terminal, where the responding terminal is a target terminal for a shared COT;
determining a second terminal as a target receiving terminal of a data packet in a LCP procedure, in which the second terminal is an initiating terminal for the shared COT; and
sending the data packet to the second terminal using the shared COT.

In this technical solution, the initiating terminal for the shared COT is determined as the target receiving terminal of the data packet in the LCP procedure by the responding terminal for the COT. This can support the LCP for the COT when the responding terminal for the shared COT sends the data to the initiating terminal. When the responding terminal uses the shared COT for sending the data packet, it can ensure that the receiving terminal of the data packet is the initiating terminal for the shared COT, which solves the problem of how to use the shared COT transmission in the Sidelink-U scenario.

In an implementation, determining the first terminal as the responding terminal includes: receiving side link control information (SCI) sent by the second terminal, the SCI being used to carry shared COT indication information; determining a target address indicated by the SCI, and/or a target terminal identifier indicated by the shared COT indication information; and determining the first terminal as the responding terminal according to the target address indicated by the SCI and/or the target terminal identifier indicated by the shared COT indication information.

In a possible implementation, determining the first terminal as the responding terminal according to the target address indicated by the SCI and/or the target terminal identifier indicated by the shared COT indication information includes: in a case that there is a unicast connection exists between the first terminal and the second terminal, and the target address indicated by the SCI is a layer 2 address of the first terminal, determining the first terminal as the responding terminal.

In a possible implementation, determining the first terminal as the responding terminal according to the target address indicated by the SCI and/or the target terminal identifier indicated by the shared COT indication information includes: in response to a multicast service being performed between the first terminal and the second terminal, the target address indicated by the SCI being a layer 2 address associated with the multicast service, and/or the target terminal identifier indicated by the shared COT indication information being the same as a terminal identifier of the first terminal, determining the first terminal as the responding terminal.

In a possible implementation, determining the first terminal as the responding terminal according to the target address indicated by the SCI and/or the target terminal identifier indicated by the shared COT indication information includes: in response to a broadcast service being performed between the first terminal and the second terminal, the target address indicated by the SCI being a layer 2 address associated with the broadcast service, and/or the target terminal identifier indicated by the shared COT indication information being the same as a terminal identifier of the first terminal, determining the first terminal as the responding terminal.

In an implementation, determining the second terminal as the target receiving terminal of the data packet in the LCP procedure includes: determining a layer 2 address of the second terminal as a target address of the data packet in the LCP procedure, in which a service type associated with the data packet is unicast, and a channel access priority class (CAPC) of the data packet is less than or equal to a CAPC indicated by the shared COT indication information.

In an implementation, determining the second terminal as the target receiving terminal of the data packet in the LCP procedure includes: determining an address associated with a multicast service as a target address of the data packet in the LCP procedure, in which a service type associated with the data packet is multicast, the second terminal is a receiving terminal of the multicast service, and a CAPC of the data packet is less than or equal to a CAPC indicated by the shared COT indication information.

In an implementation, determining the second terminal as the target receiving terminal of the data packet in the LCP procedure includes: determining an address associated with a broadcast service as a target address of the data packet in the LCP procedure, in which a service type associated with the data packet is broadcast, the second terminal is a receiving terminal of the broadcast service, and a CAPC of the data packet is less than or equal to a CAPC indicated by the shared COT indication information.

In a possible implementation, determining the second terminal as the target receiving terminal of the data packet in the LCP procedure further includes: selecting a logical channel (LCH) belonging to the target address and having a CAPC less than or equal to the CAPC indicated by the shared COT indication information in the LCP procedure.

In a second aspect, embodiments of the present disclosure provide another sidelink transmission method. The method is performed by a second terminal, and the method includes:
receiving a data packet sent by a first terminal using a shared COT, in which the second terminal is an initiating terminal for the shared COT, the first terminal is a responding terminal for the shared COT, the responding terminal is a target terminal for the shared COT, and a target receiving terminal of the data packet is the second terminal.

In this technical solution, when the responding terminal uses the shared COT for sending the data packet, it can ensure that the receiving terminal of the data packet is the initiating terminal for the shared COT. This can support the LCP for the COT when the responding terminal for the shared COT sends the data to the initiating terminal, which solves the problem of how to use the shared COT transmission in the Sidelink-U scenario.

In an implementation, the method further includes: sending SCI to the first terminal, the SCI being used to carry shared COT indication information, in which the SCI and/or the shared COT indication information indicates that the first terminal is the responding terminal, and the shared COT indication information also indicates a CAPC.

In a third aspect, embodiments of the present disclosure provide a communication apparatus having the function of implementing some or all of the functions of the first terminal in the methods described in the first aspect above. For example, the functions of the communication apparatus may have the functions of some or all of the embodiments of the present disclosure, or may have the functions of solely implementing any one of the embodiments of the present disclosure. The functions can be implemented by hardware, or by hardware executing corresponding software. The hardware or software includes one or more units or modules corresponding to the above functions.

In an implementation, a structure of the communication apparatus may include a transceiver module and a processing module. The processing module is configured to support the communication apparatus to perform corresponding functions in the above methods. The transceiver module is configured to support communication between the communication apparatus and another apparatus. The communication apparatus may further include a storage module, and the storage module is coupled to the transceiver module and the processing module, and stores a computer program and data necessary for the communication apparatus.

In an implementation, the processing module is configured to determine the first terminal as a responding terminal, and the responding terminal is a target terminal for a shared COT, the processing module is also configured to determine a second terminal as a target receiving terminal of a data packet in a LCP procedure, in which the second terminal is an initiating terminal for the shared COT; and the transceiver module is configured to send the data packet to the second terminal using the shared COT.

In a possible implementation, the transceiver module is further configured to receive SCI sent by the second terminal, the SCI being used to carry shared COT indication information; the processing module is further specifically configured to: determine a target address indicated by the SCI and/or a target terminal identifier indicated by the shared COT indication information, and determine the first terminal as the responding terminal according to the target address indicated by the SCI and/or the target terminal identifier indicated by the shared COT indication information.

In a possible implementation, the processing module is specifically configured to: determine the first terminal as the responding terminal, in a case that there is a unicast connection exists between the first terminal and the second terminal, and the target address indicated by the SCI is a layer 2 address of the first terminal.

In another possible implementation, the processing module is specifically configured to: determine the first terminal as the responding terminal, in response to a multicast service being performed between the first terminal and the second terminal, the target address indicated by the SCI being a layer 2 address associated with the multicast service, and/or the target terminal identifier indicated by the shared COT indication information being the same as a terminal identifier of the first terminal.

In another possible implementation, the processing module is specifically configured to: determine that the first terminal as the responding terminal, in response to a broadcast service being performed between the first terminal and the second terminal, the target address indicated by the SCI being a layer 2 address associated with the broadcast service, and/or the target terminal identifier indicated by the shared COT indication information being the same as a terminal identifier of the first terminal.

In an implementation, the processing module is specifically configured to: determine a layer 2 address of the second terminal as a target address of the data packet in the LCP procedure, in which a service type associated with the data packet is unicast, and a CAPC of the data packet is less than or equal to a CAPC indicated by the shared COT indication information.

In an implementation, the processing module is specifically configured to: determine an address associated with a multicast service as a target address of the data packet in the LCP procedure, in which a service type associated with the data packet is multicast, the second terminal is a receiving terminal of the multicast service, and a CAPC of the data packet is less than or equal to a CAPC indicated by the shared COT indication information.

In an implementation, the processing module is specifically configured to: determine an address associated with a broadcast service as a target address of the data packet in the LCP procedure, in which a service type associated with the data packet is broadcast, the second terminal is a receiving terminal of the broadcast service, and a CAPC of the data packet is less than or equal to a CAPC indicated by the shared COT indication information.

In an implementation, the processing module is further configured to: select an LCH belonging to the target address and having a CAPC less than or equal to the CAPC indicated by the shared COT indication information in the LCP procedure.

As an example, the processing module may be a processor, the transceiver module may be a transceiver or a communication interface, and the storage module may be a memory.

In a fourth aspect, embodiments of the present disclosure provide another communication apparatus, which has the functions of implementing some or all of the functions of the second terminal in the method examples described in the second aspect above. For example, the functions of the communication apparatus may have the functions of some or all of the embodiments of the present disclosure, or may have the functions of solely implementing any one of the embodiments of the present disclosure. The functions can be implemented by hardware, or by hardware executing corresponding software. The hardware or software includes one or more units or modules corresponding to the above functions.

In an implementation, a structure of the communication apparatus may include a transceiver module and a processing module. The processing module is configured to support the communication apparatus to perform corresponding functions in the above methods. The transceiver module is configured to support communication between the communication apparatus and another apparatus. The communication apparatus may further include a storage module, which is coupled to the transceiver module and the processing module and stores a computer program and data necessary for the communication apparatus.

In an implementation, the transceiver module is configured to receive a data packet sent by a first terminal using a shared COT, in which the second terminal is an initiating terminal for the shared COT, the first terminal is a responding terminal for the shared COT, the responding terminal is a target terminal for the shared COT, and a target receiving terminal of the data packet is the second terminal.

In an implementation, the transceiver module is also configured to: send SCI to the first terminal, the SCI being used to carry shared COT indication information, in which the SCI and/or the shared COT indication information indicates that the first terminal is the responding terminal, and the shared COT indication information also indicates a CAPC.

In a fifth aspect, embodiments of the present disclosure provide a communication apparatus, which includes a processor. When the processor calls a computer program in a memory, the method described in the first aspect is executed.

In a sixth aspect, embodiments of the present disclosure provide a communication apparatus, which includes a processor. When the processor calls a computer program in a memory, the method described in the second aspect is executed.

In a seventh aspect, embodiments of the present disclosure provide a communication apparatus. The apparatus includes a processor and a memory. A computer program is stored in the memory. The processor executes the computer program stored in the memory, to cause the communication apparatus to perform the method described in the first aspect above.

In an eighth aspect, embodiments of the present disclosure provide a communication apparatus. The apparatus includes a processor and a memory. A computer program is stored in the memory. The processor executes the computer program stored in the memory, to cause the communication apparatus to perform the method described in the second aspect above.

In a ninth aspect, embodiments of the present disclosure provide a communication apparatus. The apparatus includes a processor and an interface circuit. The interface circuit is configured to receive code instructions and transmit them to the processor. The processor is configured to run the code instructions to enable the apparatus to perform the method described in the first aspect above.

In a tenth aspect, embodiments of the present disclosure provide a communication apparatus. The apparatus includes a processor and an interface circuit. The interface circuit is configured to receive code instructions and transmit them to the processor. The processor is configured to run the code instructions to enable the apparatus to perform the method described in the second aspect above.

In an eleventh aspect, embodiments of the present disclosure provide a sidelink transmission system. The system includes the communication apparatus described in the third aspect and the communication apparatus described in the fourth aspect, or the system includes the communication apparatus described in the fifth aspect and the communication apparatus described in the sixth aspect, or the system includes the communication apparatus described in the seventh aspect and the communication apparatus described in the eighth aspect, or the system includes the communication apparatus described in the ninth aspect and the communication apparatus described in the tenth aspect.

In a twelfth aspect, embodiments of the present disclosure provide a computer-readable storage medium. The storage medium is configured to store instructions for the above-mentioned first terminal. When the instructions are executed, the first terminal is caused to perform the method described in the above-mentioned first aspect.

In a thirteenth aspect, embodiments of the present disclosure provide a computer-readable storage medium. The storage medium is configured to store instructions for the above-mentioned second terminal. When the instructions are executed, the second terminal is caused to perform the method described in the above-mentioned second aspect.

In a fourteenth aspect, the present disclosure further provides a computer program product including a computer program that, when executed on a computer, enables the computer to execute the method described in the first aspect above.

In a fifteenth aspect, the present disclosure further provides a computer program product including a computer program that, when executed on a computer, enables the computer to execute the method described in the second aspect above.

In a sixteenth aspect, the present disclosure provides a chip system including at least one processor and an interface for supporting a first terminal to implement the functions involved in the first aspect, for example, determining or processing at least one of the data and information involved in the above method. In a possible design, the chip system further includes a memory, which is used to store a computer program and data necessary for the first terminal. The chip system may be composed of chips, or may include chips and other discrete components.

In a seventeenth aspect, the present disclosure provides a chip system including at least one processor and an interface for supporting a second terminal to implement the functions involved in the second aspect, for example, determining or processing at least one of the data and information involved in the above method. In a possible design, the chip system further includes a memory, which is used to store a computer program and data necessary for the second terminal. The chip system may be composed of chips, or may include chips and other discrete components.

In an eighteenth aspect, the present disclosure provides a computer program that, when executed on a computer, enables the computer to execute the method described in the first aspect above.

In a nineteenth aspect, the present disclosure provides a computer program that, when executed on a computer, enables the computer to execute the method described in the second aspect above.

### BRIEF DESCRIPTION OF THE DRAWINGS

In order to more clearly illustrate the technical solutions in the embodiments of the present disclosure or the background technology, the drawings required for use in the embodiments of the present disclosure or the background technology will be described below.
FIG. 1 is a schematic diagram of an architecture of a communication system provided by an embodiment of the present disclosure.
FIG. 2 is a schematic flow chart of a sidelink transmission method provided by an embodiment of the present disclosure.
FIG. 3 is a schematic flow chart of another sidelink transmission method provided by an embodiment of the present disclosure.
FIG. 4 is a schematic flow chart of another sidelink transmission method provided by an embodiment of the present disclosure.
FIG. 5 is an interaction flow chart of a sidelink transmission system provided by an embodiment of the present disclosure.
FIG. 6 is a schematic structural diagram of a communication apparatus provided by an embodiment of the present disclosure.
FIG. 7 is a schematic structural diagram of another communication apparatus provided by an embodiment of the present disclosure.
FIG. 8 is a schematic structural diagram of a chip provided by an embodiment of the present disclosure.

### DETAILED DESCRIPTION

Embodiments of the present disclosure are described in detail below, examples of which are shown in the accompanying drawings, where the same or similar reference numerals throughout represent the same or similar elements or elements having the same or similar functions. The embodiments described below with reference to the accompanying drawings are exemplary and are intended to explain the present disclosure but should not be construed as limitation of the present disclosure. In the description of the present disclosure, unless otherwise specified, "/" means or, for example, A/B can mean A or B; "and/or" in the description is only a way to describe the association relationship of associated objects, indicating that there can be three relationships, for example, A and/or B can mean: A exists alone, A and B exist at the same time, and B exists alone.

The terms used in the embodiments of the present disclosure are only for the purpose of describing specific embodiments and are not intended to limit the embodiments of the present disclosure. As used in the present disclosure and the appended claims, the singular forms "a", "an", and "the" are intended to include the plural forms as well, unless the context clearly indicates otherwise.

It should be understood that although the terms first, second, third, etc. may be used to describe various information in the embodiments of the present disclosure, the information should not be limited to these terms. These terms are used only to distinguish information of the same type from one another. For example, without departing from the scope of the embodiments of the present disclosure, first information may also be referred to as second information, and similarly, second information may also be referred to as first information. Depending on the context, the words "if" as used here may be interpreted as "when", "in a case that", or "in response to determining that."

To facilitate understanding, the terms involved in the present disclosure are first introduced.
1. Initiating terminal for a shared channel occupancy time (COT)
   The initiating terminal for the shared COT (COT initiating UE) refers to a terminal that initiates the shared COT.
2. Responding terminal for the shared COT
   The responding UE for the shared COT (COT responding UE) refers to a terminal that uses the shared COT. For example, when the responding terminal is a target receiving terminal for the COT initiating terminal, the responding terminal may share the COT. The responding terminal is the target receiving terminal for the COT initiating terminal, which means that a target address indicated in sidelink control information (SCI) of the initiating terminal initiating the shared COT is an address of the responding terminal, and/or that a target terminal identifier indicated by shared COT indication information in the SCI is a terminal identifier of the responding terminal. As an example, the responding terminal may be a responding user equipment. The responding terminal for the shared COT may also be referred to as a target terminal for the shared COT.
3. Sidelink-Unlicensed (Sidelink-U) scenario
   The Sidelink-U scenario means that sidelink communication can use an unlicensed frequency band or frequency spectrum. The unlicensed frequency band or frequency spectrum is open and can be effectively utilized to improve performance and speed. Communication apparatuses may communicate on unlicensed frequency band resources obtained through contending for the resources.
4. Sidelink logical channel prioritization (LCP) (also called SL LCP)
   Its basic logic is similar to that of Uu LCP, but because a TX UE may need to send data to multiple RX UEs at the same time on the sidelink, it is necessary to first select a destination corresponding to the highest priority logical channel (or an MAC CE) from the MAC CE and logical channels meeting a predefined condition (such as data is available, a type and an index corresponding to a configured grant meet conditions, an HARQ attribute meets conditions, etc.), that is, to confirm which object is being sent to a peer end. After that for all logical channels belonging to the destination it is further determined whether all conditions are met, and the logical channels are selected for multiplexing.

An SL LCP procedure may include the following types.

A first type of SL LCP procedure: the sending terminal may select the destination corresponding to the logical channel with the highest priority or the MAC CE among all of the MAC CE and the logical channels meeting the predefined condition, as a final destination in the SL LCP procedure, that is, a destination for actually transmitting transport block (TB) after the SL LCP procedure is completed. The predefined condition may include at least one of: there being data to be transmitted; an associated SBj value being greater than 0 (SBj>0); an associated configured grant resource type matching a current resource type; an associated configured grant resource index matching a current resource; or an associated HARQ attribute being that the HARQ is not supported, if the current resource does not include a feedback resource.

A second type of SL LCP procedure: the sending terminal may select the destination corresponding to the logical channel with the highest priority or the MAC CE among all of the MAC CE meeting a target condition and the logical channels meeting the predefined condition and the target condition, as the final destination in the SL LCP procedure. The target condition reflects an impact of an SL DRX mechanism on the final destination selection, that is, considering whether the destination corresponding to the MAC CE/logical channel is in an activation time when the current selected resource is sent. It can be understood that the destination corresponding to the MAC CE (or the logical channel) that meets the target condition may meet the following requirement: the sending resource is within the activation time of the destination.

It can be seen that a common point of these two types of SL LCP procedures includes: the destination corresponding to the MAC CE and the destination corresponding to the logical channel that meets the predefined condition may be determined as the alternative destinations in the SL LCP procedure.

The difference between these two types of SL LCP procedures includes: for the first type of SL LCP procedure, the sending terminal may directly select the final destination in the SL LCP procedure from the determined alternative destinations; while for the second type of SL LCP procedure, after determining the alternative destinations, the sending terminal needs to further consider whether the alternative destinations meet the target condition, so as to screen out the alternative destinations that meet the target condition, and then select the final destination in the SL LCP procedure from the alternative destinations that meet the target condition. Therefore, the second type of SL LCP procedure may be regarded as an enhancement version of the first type of SL LCP procedure.

In the above description, the alternative destinations are determined based on the judgment result of whether the logical channel corresponding to the destination meets the predefined condition, and the MAC CE corresponding to the destination. However, it should be noted that the above manner of determining the alternative destinations is only a manner of determining the alternative destinations in the embodiments of the present disclosure. The alternative destinations of the embodiments of the present disclosure may also be determined in other manners. Please see the subsequent descriptions of the alternative destinations for details. It will not be described here.

In addition, in the following descriptions, when the type of SL LCP procedure is not clear, the SL LCP procedure can be understood as the above-mentioned first type SL LCP procedure, or it can be understood as the above-mentioned second type SL LCP procedure. The specific decision can be made based on actual conditions, and this is not limited in the embodiments of the present disclosure.

The embodiments of the present disclosure are described in detail below, examples of which are illustrated in the accompanying drawings, in which the same or similar reference numerals refer to the same or similar elements throughout. The embodiments described below with reference to the accompanying drawings are exemplary and are intended to explain the present disclosure but should not be construed as limiting the present disclosure.

In order to support direct communication between terminals, a communication mode of direct communication (also called sidelink, SL) is introduced, and an interface between the terminals is PC-5. Based on correspondence relationships between the sending and receiving terminals, three transmission modes are supported on the sidelink, such as unicasting, multicasting, and broadcasting. The transmitting terminal sends SCI on a Physical Sidelink Control Channel (PSCCH) and sends a second-stage SCI on a Physical Sidelink Shared Channel (PSSCH), which carries a resource location of transmitted data, as well as a source identifier and a destination identifier, etc. For a data packet with Hybrid Automatic Repeat Request (HARQ) feedback enabled, the receiving terminal performs a Hybrid Automatic Repeat Request Acknowledgement (HARQ-ACK) feedback for the PSSCH on a Physical Sidelink Feedback Channel (PSFCH).

A multiplexing function of a Medium Access Control (MAC) layer of the transmitting end loads data of multiple logical channels into one transmission channel. That is, multiple MAC Service Data Units (MAC SDUs) are multiplexed into one MAC Protocol Data Unit (MAC PDU) and sent out through a physical layer channel. When the multiple logical channels have data to be sent and a total amount of the data exceeds a currently authorized transmission capacity, the question which logical channel should be given priority for transmission arises. This is called Logical Channel Prioritization (LCP).

Each logical channel has a priority for logical channel scheduling. This priority is configured by a network. The network configures it for a connected terminal (UE) through a dedicated signaling and for an idle UE through a broadcast. The network configures the priority for this logical channel based on Quality of Service (QoS) of the data carried by the logical channel. When the terminal obtains a scheduling opportunity, that is, a resource for sidelink data transmission, the UE first selects a target UE, where a UE corresponding to a Sidelink logical channel and/or an SL MAC CE with the highest priority is selected as the target UE.

There are two transmission resource allocation modes for sidelink communication: one is a network dynamic scheduling mode (mode 1), and another is a UE autonomous selection mode from a network configured or pre-configured resource pool (mode 2). The dynamic scheduling means that the network dynamically allocates a transmission resource on the sidelink to the UE based on the UE's buffered data report, while the autonomous selection means that the UE randomly selects a transmission resource from the network-configured or pre-configured resource pool. The network may configure multiple resource pools for the UE on one Bandwidth Part (BWP). The specific allocation method to be used is configured by the network through a Radio Resource Control (RRC) signaling.

An NR-U (also known as a 5G NR-U, 5G New Radio in Unlicensed Spectrum, License free band 5G NR) is a project established by 3rd Generation Partnership Project (3GPP) in R16. It provides the necessary technology for an operator to fully integrate the unlicensed spectrum into the 5G network. The NR-U supports uplink and downlink operations in an unlicensed frequency band. In the NR-U, both downlink and uplink channel access rely on listen before talk (LBT) feature. A wireless device or base station must first "sense" a communication channel and detect that there is no communication before any transmission. LBT types include type 1 and type 2. The type 1 is based on a contention window, and a channel monitoring duration is determined by a random number. The channel is accessed only when the random number is equal to 0 and the channel is idle. The type 2 is based on a fixed period of monitoring channel, such as 25us, 16us, etc. A channel access priority class (CAPC) is a parameter related to the LBT. Different CAPCs affect the priority when contending for the channel. A smaller CAPC value indicates a higher priority. The terminal determines the CAPC of the MAC PDU according to the following rules:
1) If the SL MAC PDU contains only an SL MAC CE, a CAPC of the SL MAC PDU is the highest priority (lowest CAPC value);
2) If the SL MAC PDU contains a sidelink control channel service data units (SCCH SDU), a CAPC of the SL MAC PDU is the highest priority (lowest CAPC value); and
3) If the SL MAC PDU contains an SL MAC SDU, a CAPC of the SL MAC PDU is the lowest priority CAPC associated with a logical channel multiplexed to this TB (where CAPC is configured according to the logical channel), regardless of whether the SL MAC PDU contains a SL MAC CE.

It is worth noting that COT sharing is a feature currently under discussion in Release 18, which allows a terminal performing type 1 LBT to contend for COT and to share the COT with other terminals. A terminal that initiates the shared COT is called a COT initiating terminal (COT initiating UE), and a terminal that uses the shared COT is called a responding terminal (responding UE). For example, when the responding terminal is a target receiving terminal for the COT initiating terminal, the responding terminal may share the COT.

For the Sidelink of Release 18, it supports working in the unlicensed spectrum. The Sidelink-U scenario means that sidelink communication can use the unlicensed spectrum and frequency band for communication. The unlicensed spectrum and frequency band is open and can be effectively utilized to improve performance and speed. Communication apparatuses may communicate on unlicensed frequency band resources obtained through contending for the resources.

However, there is currently a lack of effective means for using shared COT transmission in the Sidelink-U scenario.

To this end, the embodiments of the present disclosure provide a sidelink transmission method and apparatus, by determining an initiating terminal for a shared COT as a target receiving terminal of a data packet in an LCP procedure through a responding terminal for the shared COT. This can support the LCP for the COT when the responding terminal for the shared COT sends data to the initiating terminal, so that when the responding terminal uses the shared COT for sending the data packet, which ensures that the receiving terminal of the data packet is the initiating terminal for the shared COT, thereby solving the problem of how to use the shared COT transmission in the Sidelink-U scenario.

In order to better understand the sidelink transmission method disclosed in an embodiment of the present disclosure, the communication system to which the embodiments of the present disclosure are applicable is first described below.

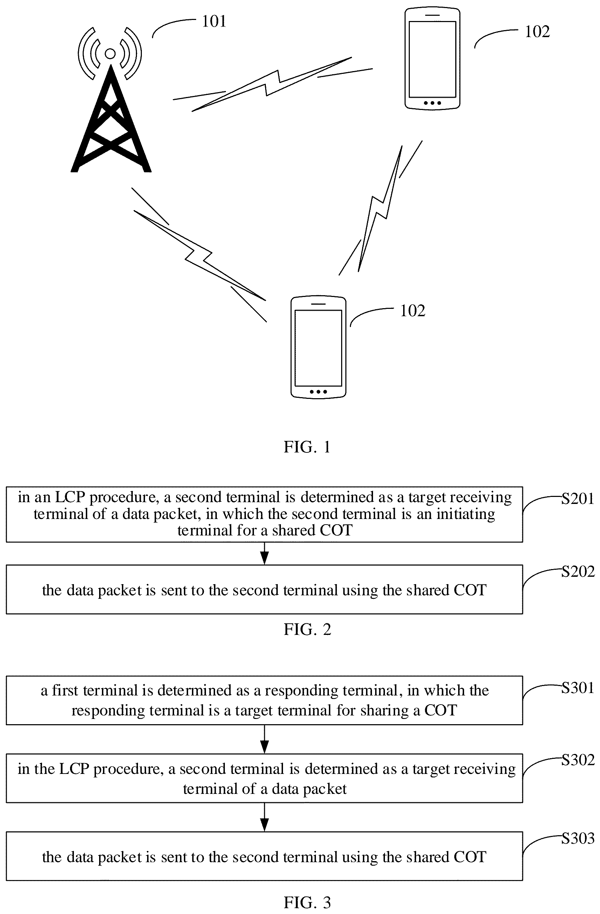

Please refer to FIG. 1, which is a schematic diagram of an architecture of a communication system provided by an embodiment of the present disclosure.

The communication system may include but is not limited to one network device and two terminals. The number and form of the devices shown in FIG. 1 are for example only and do not constitute a limitation on the embodiments of the present disclosure. In actual applications, it may include two or more network devices and three or more terminals. The communication system shown in FIG. 1 includes a network device 101 and two terminals (such as terminal 102 and terminal 103) as an example.

It should be noted that the technical solutions of the embodiments of the present disclosure are applicable to various communication systems. For example: a long term evolution (LTE) system, a fifth generation (5G) mobile communication system, a 5G new radio (NR) system, or other future new mobile communication systems. It should also be noted that the sidelink in the embodiments of the present disclosure may also be referred to as a side link or a direct link.

The network device 101 in the embodiments of the present disclosure is an entity on the network for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system, etc. The embodiments of the present disclosure do not limit the specific technology and specific device form adopted by the network device. The network device provided by the embodiments of the present disclosure may be composed of a centralized unit (CU) and a distributed unit (DU), in which the CU may also be called a control unit. The CU-DU structure may be used to split the protocol layer of the network device, such as a base station, with some functions of the protocol layer being centrally controlled by the CU, and the remaining part or all of the functions of the protocol layer being distributed in the DU, which is centrally controlled by the CU.

The terminal 102 and the terminal 103 in the embodiments of the present disclosure are both entities on a user side for receiving or transmitting signals, such as a mobile phone. It should be noted that the terminal in the embodiments of the present disclosure may also be understood as a user equipment or a terminal device. That is to say, the terminal in the embodiments of the present disclosure may also be referred to as a terminal device, a user equipment (UE), a mobile station (MS), a mobile terminal (MT), etc. The terminal may be a car with a communication capability, a smart car, a mobile phone, a wearable device, a tablet computer, a computer with wireless transceiver capabilities, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, and the like. The embodiments of the present disclosure do not limit the specific technology and specific device form adopted by the terminal.

Optionally, a first terminal mentioned in the embodiments of the present disclosure may refer to the terminal 102, and a second terminal may refer to the terminal 103.

As an example, the number of the first terminal and the second terminal mentioned in the embodiments of the present disclosure may be one or more.

It can be understood that the communication system described in the embodiments of the present disclosure is for the purpose of more clearly illustrating the technical solutions of the embodiments of the present disclosure, and do not constitute a limitation on the technical solutions provided by the embodiments of the present disclosure. Ordinary technicians in the field can know that with the evolution of the system architecture and the emergence of new service scenarios, the technical solutions provided by the embodiments of the present disclosure are also applicable to similar technical problems.

The sidelink transmission method and apparatus provided by the present disclosure are described in detail below with reference to the accompanying drawings.

Please refer to FIG. 2, which is a flowchart of a side link transmission method provided by an embodiment of the present disclosure. It should be noted that the method is applicable to an unlicensed frequency band (Sidelink-U) scenario of a sidelink. The method can be executed by the first terminal. Optionally, the first terminal may operate in sending resource allocation mode 1 or 2. As shown in FIG. 2, the method may include but is not limited to the following steps.

In step S201, in an LCP procedure, a second terminal is determined as a target receiving terminal of a data packet, in which the second terminal is an initiating terminal for a shared COT.

The first terminal is a responding terminal for the shared COT, and the responding terminal may also be called a target terminal for the shared COT.

Optionally, the first terminal may use the shared COT to send data. When the first terminal uses the shared COT for sending, the first terminal may determine the second terminal as the target receiving terminal of the data packet in the LCP procedure. In this way, it can be ensured that the receiving terminal of the data sent by the first terminal using the shared COT is the initiating terminal for the shared COT.

It should be noted that, in a possible implementation, the sidelink transmission method of an embodiment of the present disclosure is applicable to a case where the LCP procedure occurs after the first terminal receives shared COT indication information, or the LCP procedure occurs after determining that the first terminal is the responding terminal for the shared COT. That is, before the first terminal receives the shared COT indication information, the first terminal has not started packaging, so that the LCP can be enhanced according to the shared COT indication information to ensure that the initiating terminal for the shared COT is the receiving terminal of the data packet. Of course, it is also possible for the first terminal to determine the receiver of the data packet after the packaging is completed. This is not limited in the present disclosure.

It should also be noted that service types between the first terminal and the second terminal in the embodiments of the present disclosure are different. Accordingly, the implementation manners in which the first terminal determines the second terminal as the target receiving terminal of the data packet in the LCP procedure will also be different. Optionally, when the first terminal sends the data packet to the second terminal using the shared COT, a CAPC value of the data packet needs to be less than or equal to a CAPC value indicated by shared COT indication information. The following describes how the first terminal determines the second terminal as the target receiving terminal of the data packet from three aspects of a unicast service, a multicast service, and a broadcast service.

In an implementation, the first terminal determines a layer 2 address of the second terminal as a destination address of the data packet in the LCP procedure, in which the service type associated with the data packet is unicast and a CAPC of the data packet is less than or equal to a CAPC indicated by the shared COT indication information.

As an example, the responding terminal may send unicast data to the initiating terminal for the shared COT. As an example of a possible implementation, the first terminal is the responding terminal, and the first terminal determines the initiating terminal (i.e., the second terminal) for the shared COT as the target receiving terminal of the data packet in the LCP procedure. Specifically, the first terminal determines the layer 2 address of the second terminal as the destination address of the data packet in the LCP procedure, and the service type of the data packet is unicast. The CAPC of the data packet is less than or equal to the CAPC indicated by the shared COT indication information. For example, the first terminal selects a logical channel (LCH) and/or an SL MAC CE belonging to the target address and having a CAPC less than or equal to the CAPC indicated by the shared COT indication information in the LCP procedure.

In another implementation, the first terminal determines an address associated with a multicast service as the target address of the data packet in the LCP procedure, in which the service type associated with the data packet is multicast, the second terminal is the receiving terminal of the multicast service, and the CAPC of the data packet is less than or equal to the CAPC indicated by the shared COT indication information.

As an example, the responding terminal may send multicast data to the initiating terminal for the shared COT. As an example of a possible implementation, the first terminal is the responding terminal. The first terminal determines that the first terminal itself and the initiating terminal (i.e., the second terminal) of the shared COT belong to the same multicast group, that is, the multicast group associated with the second terminal also includes the first terminal. Then, the first terminal determines the address associated with the multicast service as the target address of the data packet in the LCP procedure. For example, the first terminal may determine the layer 2 address associated with the multicast service as the target address of the data packet in the LCP procedure, and the service type associated with the data packet is multicast. The second terminal is the receiving terminal of the multicast data packet, and the CAPC of the data packet is less than or equal to the CAPC indicated by the shared COT indication information. For example, the first terminal selects, in the LCP procedure, an LCH and/or an SL MAC CE that belongs to the target address and has a CAPC less than or equal to the CAPC indicated by the shared COT indication information. The layer 2 address associated with the multicast service may also be understood as the target address associated with the multicast service.

In another implementation, the first terminal determines an address associated with a broadcast service as the target address of the data packet in the LCP procedure, in which a service type associated with the data packet is broadcast, the second terminal is a receiving terminal of the broadcast service, and the CAPC of the data packet is less than or equal to the CAPC indicated by the shared COT indication information. As an example, the responding terminal may send broadcast data to the initiating terminal for the shared COT. As an example of a possible implementation, the first terminal is the responding terminal, and may determine the layer 2 address associated with the broadcast service as the target address of the data packet in the LCP procedure. The service type associated with the data packet is broadcast. The second terminal is the receiving terminal of the broadcast service. The CAPC of the data packet is less than or equal to the CAPC indicated by the shared COT indication information. For example, the first terminal selects, in the LCP procedure, an LCH and/or an SL MAC CE that belongs to the target address and has a CAPC less than or equal to the CAPC indicated by the shared COT indication information. The layer 2 address associated with the broadcast service may also be understood as the target address associated with the broadcast service.

As an example, when selecting the destination address of the data packet in the above three embodiments (i.e., the three embodiments of unicast, broadcast, and multicast), the destination address needs to meet, but is not limited to, at least one of the following conditions (i.e., condition a and condition b):

condition a: if a Sidelink Discontinuous Reception (SL DRX) is applicable to the target address, a sidelink grant is at an activation time of the target address, where the sidelink grant in this example refers to the sidelink grant used to send the data packet; or

condition b: the target address has at least one logical channel and/or an MAC CE, and the at least one logical channel and/or the MAC CE meets at least some or all of the following conditions 1) to 5):
condition 1), there is SL data to be transmitted;
condition 2), if any logical channel has SBj (token of a sidelink transmit buffer), SBj>0;
condition 3), if the sidelink grant is configured grant type 1, an sl-configuredGrantType1Allowed configuration associated with the logical channel allows an MAC SDU of the logical channel to be transmitted on the configured grant type 1;
condition 4), If a list of configuration authorizations allowed for use is configured, the list includes a configured grant identifier associated with the sidelink grant; and
condition 5), if the sidelink grant has no associated PSFCH resource, an HARQ attribute of the logical channel is HARQ-disabled.

It should be noted that the destination address of the data packet in the embodiments of the present disclosure may meet some of the above conditions (such as condition a and condition b given in the above two examples) or may meet all of the above conditions. For example, the destination address of the data packet in the embodiments of the present disclosure may meet some of the above conditions: there is SL data to be transmitted; and if any logical channel has SBj, SBj>0. That is to say, the destination address of the data packet in the embodiments of the present disclosure may only meet these two conditions or a combination of several other conditions, and not necessarily all conditions must be met. Alternatively, in a possible implementation, the destination address of the data packet in the embodiments of the present disclosure may not meet the above conditions (such as condition a, and condition b given in the above two examples).

As another example, in the above three embodiments (i.e., the three embodiments of unicast, broadcast, and multicast), the destination address of the data packet needs to meet, but is not limited to, at least one of the following conditions (i.e., condition c and condition d):
condition c: if an SL DRX is applicable to the target address, a sidelink grant is at an activation time of the target address, in which the sidelink grant in this example refers to a sidelink grant used to send the data packet; or
condition d: the target address has at least one of an MAC CE or a logical channel with the highest priority among all of first logical channels and a first MAC CE, where the first logical channel and the first MAC CE meet at least some or all of the conditions 1) to 5). The specific contents of the conditions 1) to 5) may be found in the description of conditions 1) to 5) in the above embodiments and will not be repeated here.

It should be noted that the destination address of the data packet in the embodiments of the present disclosure may meet some of the above conditions (such as condition c and condition d given in the above two examples) or may meet all of the above conditions. For example, the destination address of the data packet in the embodiments of the present disclosure may meet some of the above conditions: there is SL data to be transmitted; and if any logical channel has SBj, SBj>0. That is to say, the destination address of the data packet in the embodiments of the present disclosure may only meet these two conditions or a combination of several other conditions, and not necessarily all conditions must be met. Alternatively, in a possible implementation, the destination address of the data packet in the embodiments of the present disclosure may not meet the above conditions (such as condition c and condition d given in the above two examples).

In an embodiment of the present disclosure, as shown in FIG. 2, the method may include but is not limited to the following steps: Step S202. In step S202, the data packet is sent to the second terminal using the shared COT.

Optionally, when the first terminal determines the second terminal (i.e., the initiating terminal for the shared COT) as the target receiving terminal of the data packet in the LCP procedure, the first terminal may use the shared COT to send the data packet to the second terminal, that is, the first terminal may send the data packet to the second terminal using the COT.

By implementing the embodiments of the present disclosure, the initiating terminal for the shared COT can be determined as the target receiving terminal of the data packet in the LCP procedure through the responding terminal for the COT. This can support the LCP of the COT when the responding terminal for the shared COT sends the data to the initiating terminal. When the responding terminal uses the shared COT to send the data packet, it can be ensured that the receiving terminal of the data packet is the initiating terminal for the shared COT, thereby solving the problem of how to use the shared COT transmission in the Sidelink-U scenario.

Please refer to FIG. 3, which is a flowchart of another side link transmission method provided by an embodiment of the present disclosure. It should be noted that the method is applicable to the Sidelink-U scenario, and the method can be performed by the first terminal. Optionally, the first terminal may operate in sending resource allocation mode 1 or mode 2. As shown in FIG. 3, the method may include but is not limited to the following steps.

In step S301, a first terminal is determined as a responding terminal, in which the responding terminal is a target terminal for sharing a COT.

Optionally, the first terminal may determine whether it is the responding terminal for the shared COT. The responding terminal may refer to the target terminal for the shared COT. If the first terminal is the responding terminal, the COT may be used to send data. Optionally, the responding terminal for the shared COT may also be referred to as a shared COT target terminal, which is not limited in the present disclosure.

As an example, the responding terminal for the shared COT may use the shared COT to send data to the initiating terminal for the shared COT, or the responding terminal may use the shared COT to send data to other terminals except the initiating terminal for the shared COT. As another example, the responding terminal may only use the shared COT to send data to the initiating terminal that shares the COT. The initiating terminal for the shared COT may refer to the second terminal in the present disclosure. The data may include but is not limited to at least one of the following sidelink data: a PSSCH, a PSCCH, a PSFCH, etc.

In an embodiment of the present disclosure, the first terminal may determine whether the first terminal is the responding terminal for the shared COT (or the shared COT target terminal) based on a service type and a target address indicated by SCI carrying shared COT indication information and a target terminal identifier indicated and/or the shared COT indication information. The SCI may be sent by the initiating terminal (i.e., the second terminal) for the shared COT to other terminals when the COT is shared with other terminals. The SCI may carry the shared COT indication information. In this way, when the first terminal receives the SCI, the first terminal may determine whether the first terminal is the responding terminal for the shared COT (or the shared COT target terminal) based on the service type and the target address indicated by the SCI, and/or the target terminal identifier indicated by the shared COT indication information.

Optionally, the first terminal may determine whether the first terminal is the responding terminal for the shared COT according to the SCI carrying the shared COT indication information and/or the shared COT indication information.

That is, in an implementation, the initiating terminal may send its shared COT information, for example, via the SCI. The initiating terminal may send the shared COT indication information in the form of unicast, multicast or broadcast. When a specific terminal receives the COT information sent by the initiating terminal, it may determine whether it is the responding terminal for the COT shared by the initiating terminal based on the information. For example, in an implementation, the first terminal may receive the SCI sent by the second terminal, in which the SCI is used to carry the shared COT indication information, and the shared COT indication information may indicate the target service type, the target address, the target terminal identifier, and the like. The first terminal pre-stores its own service type, address, and terminal identifier, or may obtain its own address and terminal identifier as needed. When receiving the SCI, the first terminal may determine the target address indicated by the SCI and/or the target terminal identifier indicated by the shared COT indication information. For example, the first terminal may compare the received target address and/or the target terminal identifier with its own address and terminal identifier. When they are consistent, the first terminal determines that the first terminal is the responding terminal for the shared COT based on the target address indicated by the SCI and/or the target terminal identifier indicated by the shared COT indication information.

In an implementation, when the target service type indicated by the SCI is consistent with the service type of the first terminal, the first terminal determines itself as the responding terminal for the shared COT.

In an implementation, when the target address indicated by the SCI is consistent with the address of the first terminal, the first terminal determines itself as the responding terminal for the shared COT.

In an implementation, when the target service type indicated by the SCI is consistent with the service type of the first terminal, and the target address indicated by the SCI is consistent with the address of the first terminal, the first terminal determines itself as the responding terminal for the shared COT.

In some implementations, when the target address indicated by the SCI is consistent with the address of the first terminal, the first terminal determines itself as the responding terminal for the shared COT.

In some implementations, when the target terminal identifier indicated by the SCI is consistent with the terminal identifier of the first terminal, the first terminal determines itself as the responding terminal for the shared COT.

In some implementations, when the target service type, target address, and target terminal identifier indicated by the SCI are consistent with the corresponding service type, address, and terminal identifier of the first terminal, the first terminal determines itself as the responding terminal for the shared COT.

It should be understood that the meaning of indication via the SCI may be understood as direct indication via the SCI, or indication via specific information carried by the SCI, such as indication via the shared COT indication information, which is not limited in the present disclosure.

It is worth noting that if the service types between the first terminal and the second terminal are different, the implementations of determining the first terminal as the responding terminal for the shared COT will also be different.

In a possible implementation, when a unicast connection exists between the first terminal and the second terminal and the target address indicated by the SCI is a layer 2 address of the first terminal, the first terminal may determine itself as the responding terminal. As an example, in response to the service type indicated by the SCI carrying the shared COT indication information being the unicast service, and the target address indicated by the SCI carrying the shared COT indication information being the layer 2 address of the first terminal, the first terminal may determine itself as the responding terminal for the shared COT. Optionally, when there is the unicast connection between the first terminal and the second terminal, and the service type indicated by the SCI is unicast and the target address indicated by the SCI is not the layer 2 address of the first terminal, the first terminal may determine that it is not the responding terminal.

In another possible implementation, when a multicast service is performed between the first terminal and the second terminal, if the target address indicated by the SCI is a layer 2 address associated with the multicast service, and/or the target terminal identifier indicated by the shared COT indication information is the same as the terminal identifier of the first terminal, the first terminal may determine itself as the responding terminal. As an example, the first terminal determines that it and the second terminal belong to the same multicast group, that is, the multicast group associated with the shared COT initiating terminal also includes the first terminal. The first terminal receives the SCI carrying the shared COT indication information, where the target address indicated by the SCI is the layer 2 address associated with the multicast service, and the first terminal determines itself as the responding terminal. As another example, the first terminal determines that it and the second terminal belong to the same multicast group, that is, the multicast group associated with the shared COT initiating terminal also includes the first terminal. The first terminal receives the SCI carrying the shared COT indication information, the target address indicated by the SCI is the layer 2 address associated with the multicast service, and the target terminal identifier indicated by the shared COT indication information is the same as the terminal identifier of the first terminal, then the first terminal may determine itself as the responding terminal. The target terminal identifier indicated by the shared COT indication information may be the layer 2 address of the target terminal, an application layer address of the target terminal, or a member identifier (ID) of the target terminal. Being the same as the terminal identifier of the first terminal may mean: when the target terminal identifier indicated by the shared COT indication information is the layer 2 address of the target terminal, the layer 2 address of the target terminal may be the same as the layer 2 address of the first terminal; when the target terminal identifier indicated by the shared COT indication information is the application layer address of the target terminal, the application layer address of the target terminal is the same as the application layer address of the first terminal; or when the target terminal identifier indicated by the shared COT indication information is the target terminal member identifier, the target terminal member identifier is the same as the member identifier of the first terminal. In some examples, the target terminal identifier indicated by the shared COT indication information may be implemented in other ways, which are not specifically limited in this embodiment. Optionally, in a case that the multicast service is performed between the first terminal and the second terminal, if the SCI indicates that the service type is multicast and the target address indicated by the SCI is not the layer 2 address associated with the multicast service, and/or the target terminal identifier indicated by the shared COT indication information is different from the terminal identifier of the first terminal, the first terminal may determine that it is not the responding terminal.

In another possible implementation, when a broadcast service is performed between the first terminal and the second terminal, if the target address indicated by the SCI is a layer 2 address associated with the broadcast service, and/or the target terminal identifier indicated by the shared COT indication information is the same as the terminal identifier of the first terminal, the first terminal may determine itself as the responding terminal. The broadcast service is a broadcast service that the first terminal is interested in receiving. The first terminal receives the SCI carrying the shared COT indication information, where the target address indicated by the SCI is the layer 2 address associated with the broadcast service, and the first terminal determines itself as the responding terminal. As another example, the first terminal receives the SCI carrying the shared COT indication information, the target address indicated by the SCI is the layer 2 address associated with the broadcast service, and the target terminal identifier indicated by the shared COT indication information is the same as the terminal identifier of the first terminal, then the first terminal may determine itself as the responding terminal. The target terminal identifier indicated by the shared COT indication information may be the layer 2 address of the target terminal or an application layer address of the target terminal. Being the same as the terminal identifier of the first terminal can mean: when the target terminal identifier indicated by the shared COT indication information is the layer 2 address of the target terminal, the layer 2 address of the target terminal may be the same as the layer 2 address of the first terminal; or when the target terminal identifier indicated by the shared COT indication information is the application layer address of the target terminal, the application layer address of the target terminal is the same as the application layer address of the first terminal. In some examples, the target terminal identifier indicated by the shared COT indication information may be implemented in another way, which is not specifically limited in this embodiment. Optionally, in a case that the broadcast service is performed between the first terminal and the second terminal, if the service type indicated by the SCI is broadcast and the target address indicated by the SCI is not the layer 2 address associated with the broadcast service, and/or the target terminal identifier indicated by the shared COT indication information is different from the terminal identifier of the first terminal, the first terminal may determine that it is not the responding terminal.

In step S302, in the LCP procedure, a second terminal is determined as a target receiving terminal of a data packet, in which the second terminal is an initiating terminal for the shared COT.

The first terminal may determine the specific content of the data packet and/or determine the receiver of the data packet. For example, in the embodiments of the present disclosure, step S302 may be implemented by using any of the methods in the above embodiments, which is not limited here and will not be described in detail.

In step S303, the data packet is sent to the second terminal using the shared COT.

Optionally, when the first terminal determines itself as the responding terminal and determines the second terminal (i.e., the initiating terminal for the shared COT) as the target receiving terminal of the data packet in the LCP procedure, the first terminal may use the shared COT to send the data packet to the second terminal, that is, the first terminal may send the data packet to the second terminal using the COT.

That is, when the first terminal determines itself as the responding terminal, the first terminal may first select a destination address of the data packet and then select an LCH in the LCP procedure. As an example, when the first terminal selects the destination address of the data packet in the LCP procedure, if there is a unicast connection between the first terminal and the second terminal, the first terminal may determine the layer 2 address of the second terminal as the destination address of the data packet in the LCP procedure; if the first terminal and the second terminal belong to the same multicast group, the first terminal may determine the layer 2 address associated with the multicast service as the destination address of the data packet in the LCP procedure; or if the broadcast service is performed between the first terminal and the second terminal, the first terminal may determine the layer 2 address associated with the broadcast service as the destination address of the data packet in the LCP procedure. After selecting the target address in the LCP procedure, the first terminal selects the LCH, for example, selects an LCH and/or an SL MAC CE belonging to the target address and having a CAPC less than or equal to a CAPC indicated by the shared COT indication information. The first terminal may send the data packet packaged in the LCP procedure to the second terminal using the shared COT.

It should be noted that in a case that the first terminal determines itself as the responding terminal, the first terminal may consider, when selecting the target address of the data packet in the LCP procedure, whether there is the LCH and/or the SL MAC CE belonging to the target address and having the CAPC less than or equal to the CAPC indicated by the shared COT indication information.

As an example, when the first terminal selects the destination address of the data packet in the LCP procedure, if the unicast connection exists between the first terminal and the second terminal, the first terminal may consider, during the LCP target address selection process, whether there is the LCH and/or the SL MAC CE belonging to the layer 2 address of the second terminal and having the CAPC less than or equal to the CAPC indicated by the shared COT indication information. If there is the LCH and/or the SL MAC CE belonging to the layer 2 address of the second terminal and having the CAPC less than or equal to the CAPC indicated by the shared COT indication information, the first terminal may determine the destination address of the data packet as the layer 2 address of the second terminal, and the service type of the data packet packaged is the unicast service. After determining the destination address, the first terminal continues to select the LCH and/or the SL MAC CE belonging to the layer 2 address of the second terminal and having the CAPC less than or equal to the CAPC indicated by the shared COT indication information. Since in the process of selecting the target address, the first terminal has already determined that there is the LCH and/or the SL MAC CE belonging to the layer 2 address of the second terminal and having the CAPC less than or equal to the CAPC indicated by the shared COT indication information, when selecting the LCH and/or SL MAC CE for packaging, the first terminal may select the LCH and/or the SL MAC CE that belongs to the layer 2 address of the second terminal and has the CAPC less than or equal to the CAPC indicated by the shared COT indication information. The first terminal multiplexes the selected LCH and/or the SL MAC CE into an SL MAC PDU to form the unicast data packet. The first terminal may send the unicast data packet formed in the LCP procedure to the second terminal using the shared COT.

Optionally, when the first terminal continues to select the LCH and/or the SL MAC CE belonging to the layer 2 address of the second terminal and having the CAPC less than or equal to the CAPC indicated by the shared COT indication information, it needs to continue to select the LCH that meets the first condition and whose associated CAPC is less than or equal to the CAPC indicated by the shared COT indication information, and multiplex it into the SL MAC PDU. As an example, the first condition may be selecting the logical channel that meets all of the following conditions from the logical channels belonging to the selected target address:
1) there is SL data to be transmitted;
2) sl-configuredGrantType1Allowed, if configured, is set to true when the SL grant is configured with grant type 1;
3) SL-allowedcg-list, if configured, includes a configuration grant index associated with the SL grant; and
4) sl-harq-feedbackenabled is set to a value that meets the following conditions:
   41) if a PSFCH is configured for the sidelink grant associated with the SCI and the UE is capable of receiving the PSFCH:
      411) sl-HARQ-FeedbackEnabled is set to enabled, if the sl-HARQ-FeedbackEnabled of the highest priority logical channel that meets the above conditions is set to enabled; or
      412) sl-HARQ-FeedbackEnabled is set to disabled, If the sl-HARQ-FeedbackEnabled of the highest priority logical channel that meets the above conditions is set to disabled,
   42) if a PSFCH is not configured for the sidelink grant associated with the SCI, and/or the UE is not capable of receiving PSFCH:
      421) sl-HARQ-FeedbackEnabled is set to disabled.

As an example, when the first terminal selects the target address, the target address needs to meet but is not limited to at least one of the following conditions (i.e., condition 1 and condition 2) (that is, when selecting the target address, it is necessary to consider whether there is the LCH and/or the SL MAC CE belonging to the target address and having the CAPC less than or equal to the CAPC indicated by the shared COT indication information under at least one of the following conditions (i.e., condition 1 and condition 2):
condition 1: if an SL DRX is applicable to the target address, the sidelink grant is at the activation time of the target address; or
condition 2: the target address has at least one logical channel and/or an MAC CE, and the at least one logical channel and/or the MAC CE meets at least some or all of the following conditions 1) to 6):
   condition 1), there is SL data to be transmitted;
   condition 2), if any logical channel has SBj, SBj>0; condition 3), if the sidelink grant is a configured grant type 1, an sl-configuredGrantType1Allowed configuration associated with the logical channel allows the MAC SDU of the logical channel to be transmitted on the configured grant type 1; condition 4), if a list of allowed configured grants is configured, the list contains the configured grant identifier associated with the sidelink grant;
   condition 5), if the sidelink grant has no associated PSFCH resources, an HARQ attribute of the logical channel is HARQ-disabled; and
   condition 6), the associated CAPC is less than or equal to the CAPC indicated by the shared COT indication information.

It should be noted that, in the embodiments of the present disclosure, when selecting the target address, some of the above conditions (such as condition 1 and condition 2 given in the above two examples) may be met, or all of the above conditions may be met. For example, in an embodiment of the present disclosure, some of the above conditions may be met when selecting the target address: there is SL data to be transmitted; and if any logical channel has SBj, SBj>0. That is, in the embodiments of the present disclosure, when selecting the target address, only these two conditions or a combination of several other conditions may be satisfied, and not all conditions necessarily need to be satisfied. Alternatively, in a possible implementation, the above conditions (such as condition 1 and condition 2 given in the above two examples) may not be met when selecting the target address in an embodiment of the present disclosure.

As another example, the first terminal device needs to meet but not be limited to at least one of the following conditions (i.e., condition 3 and condition 4) when selecting the target address (that is, when selecting the target address, it is necessary to consider whether there is an LCH and/or SL MAC CE belonging to the target address and having the CAPC less than or equal to the CAPC indicated by the shared COT indication information under at least one of the following conditions (i.e., condition 3 and condition 4)):
condition 3: if an SL DRX is applicable to the target address, the sidelink grant is at an activation time of the target address; or
condition 4: the target address has at least one MAC CE or logical channel with the highest priority among all of first logical channels and a first MAC CE, in which the first logical channels and the first MAC CE meet at least some or all of the conditions 1) to 6). The specific contents of the conditions 1) to 6) may be found in the description of conditions 1) to 6) in the above embodiments and will not be repeated here.

It should be noted that, in the embodiments of the present disclosure, when selecting the target address, some of the above conditions (such as conditions 3 and 4 given in the above two examples) may be met, or all of the above conditions may be met. For example, in the embodiments of the present disclosure, some of the above conditions may be met when selecting the target address: there is SL data to be transmitted; and if any logical channel has SBj, SBj>0. That is, in the embodiments of the present disclosure, when selecting a target address, only these two conditions or a combination of several other conditions may be met, and not all conditions necessarily need to be met. Alternatively, in a possible implementation, the above conditions (such as conditions 3 and 4 given in the above two examples) may not be met when selecting the target address in the embodiments of the present disclosure.

Optionally, the terminal may operate in transmission resource allocation mode 1 or mode 2.

If the first terminal and the second terminal belong to the same multicast group, the first terminal may consider, during the LCP target address selection process, whether there is an LCH and/or an SL MAC CE belonging to a layer 2 address associated with the multicast service and having a CAPC less than or equal to a CAPC indicated by the shared COT indication information. If there is the LCH and/or the SL MAC CE belonging to the destination address/layer 2 address associated with the multicast service and having the CAPC less than or equal to the CAPC indicated by the shared COT indication information, the first terminal may determine the target address of the data packet as the layer 2 address associated with the multicast service. The service type of the data packet thus packaged is the multicast service. After determining the target address, the first terminal continues to select an LCH and/or an SL MAC CE belonging to the destination address/layer 2 address associated with the multicast service and having the CAPC less than or equal to the CAPC indicated by the shared COT indication information. Since during the target address selection process, the first terminal has already determined that there is the LCH and/or the SL MAC CE belonging to the layer 2 address associated with the multicast service and having the CAPC less than or equal to the CAPC indicated by the shared COT indication information, the first terminal may select, in the process of selecting the LCH and/or the SL MAC CE for the packet grouping, the first terminal may select the LCH and/or the SL MAC CE that belongs to the destination address/layer 2 address associated with the multicast service and whose CAPC is less than or equal to the CAPC indicated by the shared COT indication information. The first terminal multiplexes the selected LCH and/or SL MAC CE into an SL MAC PDU to form a multicast data packet. The first terminal may send the multicast data packet formed in the LCP procedure to the second terminal using the shared COT.

Optionally, when the first terminal continues to select the LCH and/or SL MAC CE that belongs to the destination address/layer 2 address associated with the multicast service and whose CAPC is less than or equal to the CAPC indicated by the shared COT indication information, it needs to continue to select the LCH that meets the first condition and whose associated CAPC is less than or equal to the CAPC indicated by the shared COT indication information, and multiplex it into the SL MAC PDU. As an example, the implementation of the first condition may refer to the implementation of the first condition described above. This is not limited in the present disclosure, and will not repeated here.

As an example, when the first terminal device selects the target address, the target address needs to meet but is not limited to at least one of the following conditions (i.e., condition 1 and condition 2) (that is, when selecting the target address, it is necessary to consider whether there is an LCH and/or an SL MAC CE belonging to the target address and having the CAPC less than or equal to the CAPC indicated by the shared COT indication information under at least one of the following conditions (i.e., condition 1 and condition 2)). The specific contents of condition 1 and condition 2 may be found in the description of condition 1 and condition 2 mentioned above. This is not limited in the present disclosure, and will not repeated here.

As another example, when the first terminal device selects the target address, the target address needs to meet but not be limited to at least one of the following conditions (i.e., condition 3 and condition 4) (that is, when selecting the target address, it is necessary to consider whether there is an LCH and/or SL MAC CE belonging to the target address and having a CAPC less than or equal to the CAPC indicated by the shared COT indication information under at least one of the following conditions (i.e., condition 3 and condition 4)). The specific contents of condition 3 and condition 4 may be found in the description of condition 3 and condition 4 mentioned above. This is not limited in the present disclosure, and will not repeated here.

If the broadcast service is performed between the first terminal and the second terminal, the first terminal may consider, during the LCP target address selection process, whether there is an LCH and/or an SL MAC CE belonging to the destination address/layer 2 address associated with the broadcast service and having a CAPC less than or equal to the CAPC indicated by the shared COT indication information. If there is the LCH and/or SL MAC CE belonging to the destination address/layer 2 address associated with the broadcast service and having the CAPC less than or equal to the CAPC indicated by the shared COT indication information, the first terminal may determine the target address of the data packet as the destination address/layer 2 address associated with the broadcast service. The service type of the data packet thus packaged is the broadcast service. After determining the target address, the first terminal continues to select an LCH and/or SL MAC CE belonging to the destination address/layer 2 address associated with the broadcast service and having the CAPC less than or equal to the CAPC indicated by the shared COT indication information. Since during the target address selection process, the first terminal has already determined that there is the LCH and/or SL MAC CE belonging to the destination address/layer 2 address associated with the broadcast service and having the CAPC less than or equal to the CAPC indicated by the shared COT indication information, the first terminal may select, in the process of selecting the LCH and/or the SL MAC CE for packet assembly, the LCH and/or the SL MAC CE that belongs to the destination address/layer 2 address associated with the broadcast service and has the CAPC less than or equal to the CAPC indicated by the shared COT indication information. The first terminal multiplexes the selected LCH and/or SL MAC CE into a SL MAC PDU to form a broadcast data packet. The first terminal may send the broadcast data packet formed in the LCP procedure to the second terminal using the shared COT.

Optionally, when the first terminal continues to select the LCH and/or SL MAC CE that belongs to the destination address/layer 2 address associated with the broadcast service and has the CAPC less than or equal to the CAPC indicated by the shared COT indication information, it needs to continue to select the LCH that meets the first condition and whose associated CAPC is less than or equal to the CAPC indicated by the shared COT indication information, and multiplex it into the SL MAC PDU. As an example, the implementation of the first condition may refer to the implementation of the first condition described above. This is not limited in the present disclosure, and will not repeated here.

As an example, when the first terminal device selects the target address, the target address needs to meet but is not limited to at least one of the following conditions (i.e., condition 1 and condition 2) (that is, when selecting the target address, it is necessary to consider whether there is the LCH and/or SL MAC CE belonging to the target address and having the CAPC less than or equal to the CAPC indicated by the shared COT indication information under at least one of the following conditions (i.e., condition 1 and condition 2)). The specific contents of condition 1 and condition 2 may be found in the description of condition 1 and condition 2 mentioned above. This is not limited in the present disclosure, and will not repeated here.

As another example, when the first terminal device selects the target address, the target address needs to meet but not be limited to at least one of the following conditions (i.e., condition 3 and condition 4) (that is, when selecting the target address, it is necessary to consider whether there is an LCH and/or SL MAC CE belonging to the target address and having the CAPC less than or equal to the CAPC indicated by the shared COT indication information under at least one of the following conditions (i.e., condition 3 and condition 4)). The specific contents of condition 3 and condition 4 may be found in the description of condition 3 and condition 4 mentioned above. This is not limited in the present disclosure, and will not repeated here.

It should be noted that the data packet involved in the embodiments of the present disclosure may be an SL MAC PDU. It is worth noting that in the embodiments of the present disclosure, when the first terminal determines itself as the responding terminal, the first terminal determines that itself and the second terminal (i.e., the initiating terminal for the shared COT) belong to the same multicast group/the first terminal and the second terminal may receive the same multicast service, and there is a unicast connection between the first terminal and the second terminal (the unicast service may be performed), and the first terminal and the second terminal may also receive the same broadcast service. If the first terminal determines, when selecting the target address of the data packet, that there is the LCH and/or the SL MAC CE belonging to the layer 2 address of the second terminal and having the CAPC less than or equal to the CAPC indicated by the shared COT indication information, and the first terminal determines that the unicast data packet may be formed and the CAPC of the unicast data packet is less than or equal to the CAPC indicated by the shared COT indication information, then the first terminal may form the unicast data packet through the LCP procedure and use the shared COT to send the unicast data packet to the second terminal.

If the first terminal determines, when selecting the target address of the data packet, that there is the LCH and/or the SL MAC CE that belongs to the layer 2 address associated with the multicast service and whose CAPC is less than or equal to the CAPC indicated by the shared COT indication information, and the first terminal determines that a multicast data packet may be formed and the CAPC of the multicast data packet is less than or equal to the CAPC indicated by the shared COT indication information, then the first terminal may form the unicast data packet through the LCP procedure and use the shared COT to send the multicast data packet to the second terminal.

If the first terminal determines, when selecting the target address of the data packet, that there is the LCH and/or the SL MAC CE that belongs to the layer 2 address associated with the broadcast service and has the CAPC less than or equal to the CAPC indicated by the shared COT indication information, and the first terminal determines that a broadcast data packet may be formed and the CAPC of the broadcast data packet is less than or equal to the CAPC indicated by the shared COT indication information, then the first terminal may form the unicast data packet through the LCP procedure and use the shared COT to send the broadcast data packet to the second terminal.

That is, if the first terminal finds, when determining the target address, that only the unicast has the LCH that meets the conditions, that is, the first terminal finds only the LCH and/or the SL MAC CE belonging to the layer 2 address of the second terminal and having the CAPC less than or equal to the CAPC indicated by the shared COT indication information, and does not find any LCH that meets the conditions for the multicast (that is, no LCH and/or SL MAC CE belonging to the layer 2 address associated with the multicast service and having the CAPC less than or equal to the CAPC indicated by the shared COT indication information is found), and does not find any LCH that meets the conditions for the broadcast (that is, no LCH and/or SL MAC CE belonging to the layer 2 address associated with the broadcast service and having the CAPC less than or equal to the CAPC indicated by the shared COT indication information is found), then the first terminal selects the unicast data packet packaging to form the data packet, that is, the first terminal determines the target address of the data packet as the layer 2 address of the second terminal, and selects the LCH and/or SL MAC CE belonging to the layer 2 address of the second terminal and having the CAPC less than or equal to the CAPC indicated by the shared COT indication information, and multiplexes it into the data packet. The service type of the data packet thus formed is the unicast service, and the data packet thus formed is the unicast data packet. The first terminal uses the shared COT to send the unicast data packet to the second terminal.

If the first terminal finds, when determining the target address, that only multicast has the LCH that meets the conditions, and does not find any LCH that meets the conditions for the unicast, and does not find any LCH that meets the conditions for the broadcast, then the first terminal selects the multicast data packet packaging to form the data packet, that is, the first terminal determines the target address of the data packet as the layer 2 address associated with the multicast service, and selects the LCH and/or the SL MAC CE belonging to the layer 2 address associated with the multicast service and having the CAPC less than or equal to the CAPC indicated by the shared COT indication information, and multiplexes it into the data packet. The service type of the data packet thus formed is the multicast service, and the data packet thus formed is the multicast data packet. The first terminal uses the shared COT to send the multicast data packet to the second terminal.

If the first terminal finds, when determining the target address, that only broadcast has the LCH that meets the conditions, and does not find any LCH that meets the conditions for the unicast, and does not find any LCH that meets the conditions for the multicast, then the first terminal selects the broadcast data packet packaging to form the data packet, that is, the first terminal determines the target address of the data packet as the layer 2 address associated with the broadcast service, and selects the LCH and/or the SL MAC CE belonging to the layer 2 address associated with the broadcast service and having the CAPC less than or equal to the CAPC indicated by the shared COT indication information, and multiplexes it into the data packet. The service type of the data packet thus formed is the broadcast service, and the data packet formed is the broadcast data packet. The first terminal uses the shared COT to send the broadcast data packet to the second terminal.

In an implementation, if the first terminal finds, when determining the target address, that the unicast has the LCH that meets the conditions and also finds that the multicast and/or the multicast also has the LCH that meets the conditions, the first terminal may select the unicast data packet packaging to form the data packet, that is, the first terminal determines the target address of the data packet as the layer 2 address of the second terminal, and selects the LCH and/or the SL MAC CE belonging to the layer 2 address of the second terminal and having the CAPC less than or equal to the CAPC indicated by the shared COT indication information to be multiplexed into this data packet. The service type of the data packet thus formed is the unicast service, and the data packet formed is the unicast data packet. The first terminal uses the shared COT to send the unicast data packet to the second terminal.

In another implementation, if the first terminal finds, when determining the target address, that there is the LCH that meets the conditions for unicast and also finds that there is the LCH that meets the conditions for multicast and/or multicast, the LCH and/or SL MAC CE with the smallest CAPC may be selected, and the first terminal determines the target address of the data packet as the layer 2 address corresponding to the LCH and/or SL MAC CE with the smallest CAPC. This ensures that the CAPC of the data packet sent by the first terminal to the second terminal using the shared COT is the smallest.

In another implementation, if the first terminal, when determining the target address, finds that unicast has the LCH that meets the conditions, and also finds that multicast and/or multicast also have the LCH that meets the conditions, it may be left to the terminal to implement the determining of the target address of the data packet as the layer 2 address of the second terminal, as the layer 2 address associated with the multicast service, or as the layer 2 address associated with the broadcast service.

By implementing the embodiments of the present disclosure, the initiating terminal for the shared COT can be determined as the target receiving terminal of the data packet in the LCP procedure through the responding terminal for the COT. This can support the LCP of the COT when the responding terminal for the shared COT sends the data to the initiating terminal. When the responding terminal uses the shared COT to send the data packet, it can be ensured that the receiving terminal of the data packet is the initiating terminal for the shared COT, thereby solving the problem of how to use the shared COT transmission in the Sidelink-U scenario.

It can be understood that the above embodiments describe the implementations of the sidelink transmission methods of the embodiments of the present disclosure from the first terminal side. The embodiments of the present disclosure further propose another sidelink transmission method, and the implementations of the sidelink transmission method will be described below from the second terminal side.

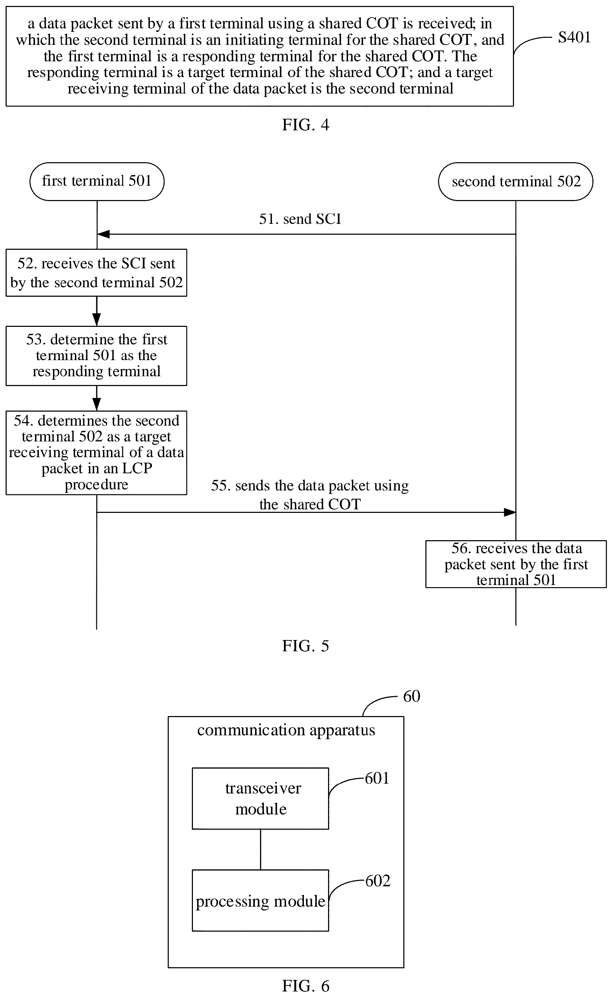

Please refer to FIG. 4, which is a flowchart of another sidelink transmission method provided by an embodiment of the present disclosure. It should be noted that the method of the embodiments of the present disclosure can be executed by the second terminal. As shown in FIG. 4, the method may include but is not limited to the following steps.

In step 401, a data packet sent by a first terminal using a shared COT is received; in which the second terminal is an initiating terminal for the shared COT, and the first terminal is a responding terminal for the shared COT. The responding terminal is a target terminal of the shared COT; and a target receiving terminal of the data packet is the second terminal.

Optionally, the second terminal, as an initiating terminal for sharing the COT, may share the COT with the first terminal. The second terminal may send SCI to the first terminal, where the SCI is used to carry shared COT indication information. The SCI and/or the shared COT indication information may indicate that the first terminal is the responding terminal, and the shared COT indication information may further indicate a CAPC.

In an implementation, when the first terminal receives the SCI sent by the second terminal, it may determine the shared COT indication information carried by the SCI, determine the service type and the target address indicated by the SCI, and determine the target terminal identifier indicated by the shared COT indication information. The first terminal may determine that the first terminal is the responding terminal for the shared COT according to the service type and the target address indicated by the SCI and/or the target terminal identifier indicated by the shared COT indication information. The first terminal determines that the first terminal is the responding terminal for the shared COT according to the service type and target address indicated by the SCI and/or the target terminal identifier indicated by the shared COT indication information. Please refer to the relevant description in step S301 above. This is not limited in the present disclosure, and will not be repeated here.

When the first terminal determines that it is the responding terminal, it may determine the second terminal as the target receiving terminal of the data packet in the LCP procedure and send the data packet to the second terminal using the shared COT. The second terminal may receive the data packet sent by the first terminal using the shared COT. The implementation of the first terminal determining the second terminal as the target receiving terminal of the data packet in the LCP procedure and using the shared COT to send the data packet to the second terminal may be referred to the relevant descriptions in steps S302 and S303 above. This is not limited in the present disclosure, and will not be repeated here.

By implementing the embodiments of the present disclosure, when the responding terminal uses the shared COT to send the data packet, it can be ensured that the receiving terminal of the data packet is the initiating terminal for the shared COT. This can support the LCP of the COT when the responding terminal for the shared COT sends the data to the initiating terminal, thereby solving the problem of how to use the shared COT transmission in the Sidelink-U scenario.

In the above embodiments provided by the present disclosure, the methods provided by the embodiments of the present disclosure are introduced from the perspectives of the first terminal and the second terminal respectively. In order to implement the various functions of the methods provided in the above embodiments of the present disclosure, the first terminal and the second terminal may include hardware structure and software module to implement the above functions in the form of hardware structure, software module, or hardware structure plus software module. Any of the above functions may be implemented in the form of a hardware structure, a software module, or a combination of a hardware structure and a software module.

Please refer to FIG. 5, which is an interaction flow chart of a sidelink transmission system provided in an embodiment of the present disclosure. As shown in FIG. 5, the system includes a first terminal 501 and a second terminal 502. The second terminal 502 may be an initiating terminal for a shared COT. The first terminal 501 may be a responding terminal for the shared COT, and the responding terminal may also be called a target terminal of the shared COT. The interaction process of the sidelink transmission system may include but is not limited to the following steps.

In step 51, the second terminal 502 sends SCI to the first terminal.

The SCI is used to carry shared COT indication information, in which the SCI and/or the shared COT indication information may indicate that the first terminal 501 is the responding terminal, and the shared COT indication information may also indicate a CAPC.

In step 52, the first terminal 501 receives the SCI sent by the second terminal 502.

In step 53, the first terminal 501 may determine the shared COT indication information carried by the SCI, determine the service type and the target address indicated by the SCI, and determine the target terminal identifier indicated by the shared COT indication information. The first terminal 501 may determine that the first terminal 501 is the responding terminal for the shared COT according to the service type and target address indicated by the SCI and/or the target terminal identifier indicated by the shared COT indication information.

For the implementations of the first terminal 501 determining that the first terminal 501 is the responding terminal for the shared COT based on the service type and target address indicated by the SCI and/or the target terminal identifier indicated by the shared COT indication information reference may be made to the relevant description in step S301 above. This is not limited in the present disclosure, and details will not be repeated here.

In step 54, the first terminal 501 determines the second terminal 502 as a target receiving terminal of a data packet in an LCP procedure.

In the embodiments of the present disclosure, step 54 may be implemented in any of the embodiments of the present disclosure, which is not limited here and will not be described in detail.

In step 55, the first terminal 501 sends the data packet to the second terminal 502 using the shared COT.

In step 56, the second terminal 502 receives the data packet sent by the first terminal 501 using the shared COT.

By implementing the embodiments of the present disclosure, when the responding terminal uses the shared COT to send the data packet, it can be ensured that the receiving terminal of the data packet is the initiating terminal for the shared COT. This can support the LCP of the COT when the responding terminal for the shared COT sends the data to the initiating terminal, thereby solving the problem of how to use the shared COT transmission in the Sidelink-U scenario.

Please refer to FIG. 6, which is a schematic structural diagram of a communication apparatus 60 provided in an embodiment of the present disclosure. The communication apparatus 60 shown in FIG. 6 may include a transceiver module 601 and a processing module 602. The transceiver module 601 may include a sending module and/or a receiving module. The sending module is configured to implement a sending function, and the receiving module is configured to implement a receiving function. The transceiver module 601 may implement a sending function and/or a receiving function.

The communication apparatus 60 may be a terminal (such as the first terminal or the second terminal in the aforementioned method embodiments), or an apparatus in a terminal, or an apparatus that can be used in conjunction with a terminal.

The communication apparatus 60 is a terminal (such as the first terminal in the aforementioned method embodiments): the processing module 602 is configured to determine the first terminal as a responding terminal, and the responding terminal is a target terminal of a shared COT; the processing module 602 is also configured to determine the second terminal as a target receiving terminal of a data packet in an LCP procedure, in which the second terminal is an initiating terminal for the shared COT; and the transceiver module 601 is configured to send a data packet to the second terminal using the shared COT.

In a possible implementation, the transceiver module 601 is further configured to receive SCI sent by the second terminal, the SCI being used to carry shared COT indication information. The processing module 602 is specifically configured to determine a target address indicated by the SCI and/or a target terminal identifier indicated by the shared COT indication information, and to determine the first terminal as the responding terminal based on the target address indicated by the SCI and/or the target terminal identifier indicated by the shared COT indication information.

In a possible implementation, the processing module 602 is specifically configured to: determine that the first terminal is the responding terminal when a unicast connection exists between the first terminal and the second terminal and the target address indicated by the SCI is a layer 2 address of the first terminal.

In another possible implementation, the processing module 602 is specifically configured to: in response to a multicast service being performed between the first terminal and the second terminal, and the target address indicated by the SCI is a layer 2 address associated with the multicast service, and/or the target terminal identifier indicated by the shared COT indication information is the same as a terminal identifier of the first terminal, determine that the first terminal is the responding terminal.

In another possible implementation, the processing module 602 is specifically configured to: in response to a broadcast service being performed between the first terminal and the second terminal, and the target address indicated by the SCI is a layer 2 address associated with the broadcast service, and/or the target terminal identifier indicated by the shared COT indication information is the same as a terminal identifier of the first terminal, determine that the first terminal is the responding terminal.

In an implementation, the processing module 602 is specifically configured to: determine a layer 2 address of the second terminal as a target address of a data packet in an LCP procedure, where a service type associated with the data packet is unicast, and a CAPC of the data packet is less than or equal to the CAPC indicated by the shared COT indication information.

In an implementation, the processing module 602 is specifically configured to: determine an address associated with the multicast service as a target address of a data packet in an LCP procedure, where a service type associated with the data packet is multicast, the second terminal is a receiving terminal of the multicast service, and a CAPC of the data packet is less than or equal to the CAPC indicated by the shared COT indication information.

In an implementation, the processing module 602 is specifically configured to: determine an address associated with the broadcast service as a target address of a data packet in an LCP procedure, where the service type associated with the data packet is broadcast, the second terminal is a receiving terminal of the broadcast service, and a CAPC of the data packet is less than or equal to the CAPC indicated by the shared COT indication information.

In an implementation, the processing module 602 is further configured to: in the LCP procedure, select an LCH that belongs to the target address and has a CAPC less than or equal to the CAPC indicated by the shared COT indication information.

The communication apparatus 60 is a terminal (such as the second terminal in the aforementioned method embodiments): the transceiver module 601 is configured to receive a data packet sent by a first terminal using a shared COT; where the second terminal is an initiating terminal for the shared COT, the first terminal is a responding terminal for the shared COT, and the responding terminal is a target terminal of the shared COT; and a target receiving terminal of the data packet is the second terminal.

In an implementation, the transceiver module 601 is also configured to: send SCI to the first terminal, where the SCI is used to carry shared COT indication information, wherein the SCI and/or the shared COT indication information indicates that the first terminal is the responding terminal, and the shared COT indication information also indicates a CAPC.

Regarding the apparatuses in the above embodiments, the specific manners in which each module performs operations has been described in detail in the embodiments of the methods, and will not be repeated here.

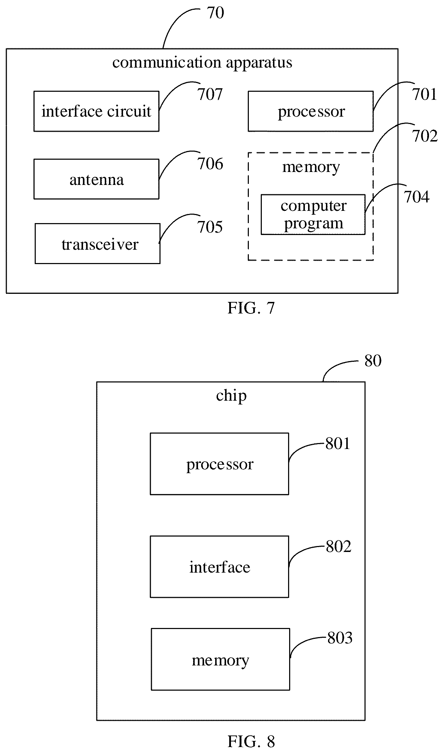

Please refer to FIG. 7, which is a schematic structural diagram of another communication apparatus 70 provided in an embodiment of the present disclosure. The communication apparatus 70 may be a terminal (such as the first terminal or the second terminal in the aforementioned method embodiments), or it may be a chip, a chip system, or a processor that supports the terminal to implement the above methods. The apparatus can be used to implement the methods described in the above method embodiments. For details, please refer to the description in the above method embodiments.

The communication apparatus 70 may include one or more processors 701. The processor 701 may be a general-purpose processor or a dedicated processor. For example, it may be a baseband processor or a central processing unit. The baseband processor may be used to process communication protocols and communication data, and the central processor may be used to control the communication apparatus (such as a base station, a baseband chip, a terminal, a terminal chip, a DU or CU, etc.), to execute a computer program, and to process computer program data.

Optionally, the communication apparatus 70 may further include one or more memories 702, on which a computer program 704 may be stored. The processor 701 executes the computer program 704, so that the communication apparatus 70 performs the methods described in the above method embodiments. Optionally, data may also be stored in the memory 702. The communication apparatus 70 and the memory 702 may be provided separately or integrated together.

Optionally, the communication apparatus 70 may further include a transceiver 705 and an antenna 706. The transceiver 705 may be referred to as a transceiver unit, a transceiving machine, or a transceiver circuit, etc., and is used to implement a transceiver function. The transceiver 705 may include a receiver and a transmitter. The receiver may be referred to as a receiver or a receiving circuit, etc., and is configured to implement a receiving function; the transmitter may be referred to as a transmitter or a transmitting circuit, etc., and is used to implement a transmitting function.

Optionally, the communication apparatus 70 may further include one or more interface circuits 707. The interface circuit 707 is configured to receive code instructions and transmit them to the processor 701. The processor 701 runs the code instructions to enable the communication apparatus 70 to perform the methods described in the above method embodiments. The communication apparatus 70 is a terminal (such as the first terminal in the aforementioned method embodiments): the processor 701 is configured to execute step S201 in FIG. 2; to execute steps S301 and S302 in FIG. 3; or to execute steps 53 and 54 in FIG. 5. The transceiver 705 is configured to execute step S303 in FIG. 3; or to execute steps 52 and 55 in FIG. 5.

The communication apparatus 70 is a terminal (such as the second terminal in the aforementioned method embodiments): the transceiver 705 is configured to execute step S401 in FIG. 4; or to execute steps 51 and 56 in FIG. 5.

In an implementation, the processor 701 may include a transceiver for implementing receiving and transmitting functions. For example, the transceiver may be transceiver circuits, interfaces, or interface circuits. The transceiver circuits, interfaces or interface circuits used to implement the receiving and transmitting functions may be separate or integrated. The above-mentioned transceiver circuits, interfaces or interface circuits may be used for reading and writing codes/data, or the above-mentioned transceiver circuits, interfaces or interface circuits may be used for transmitting or delivering signals.

In an implementation, the processor 701 may store a computer program, and the computer program runs on the processor 701 to enable the communication apparatus 70 to perform the methods described in the above method embodiments. The computer program may be embedded in the processor 701. In this case, the processor 701 may be implemented by hardware.

In an implementation, the communication apparatus 70 may include a circuit, which may implement the functions of sending, receiving, or communicating in the aforementioned method embodiments. The processor and transceiver described in the present disclosure may be implemented on an integrated circuit (IC), an analog IC, a radio frequency integrated circuit RFIC, a mixed signal IC, an application specific integrated circuit (ASIC), a printed circuit board (PCB), an electronic device, etc. The processor and transceiver may also be manufactured using various IC process technologies, such as complementary metal oxide semiconductor (CMOS), n-type metal oxide semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus described in the above embodiments may be a terminal (such as the first terminal or the second terminal in the aforementioned method embodiments), but the scope of the communication apparatus described in the present disclosure is not limited to this, and the structure of the communication apparatus may not be limited to FIG. 7. The communication apparatus may be a stand-alone device or may be part of a larger device. For example, the communication apparatus may be:
(1) an independent integrated circuit (IC), a chip, a chip system or a subsystem;
(2) a collection of one or more ICs, optionally including a storage component for storing data and a computer program;
(3) ASIC, such as Modem;
(4) modules that may be embedded in another device;
(5) a receiver, a terminal, a smart terminal, a cellular phone, a wireless device, a handheld device, a mobile unit, a vehicle-mounted device, a network device, a cloud device, an artificial intelligence device, etc.;
(6) others, etc.

For a case where the communication apparatus may be a chip or a chip system, reference may be made to the schematic structural diagram of the chip shown in FIG. 8. The chip shown in FIG. 8 includes a processor 801 and an interface 802. The number of processors 801 may be one or more, and the number of interfaces 802 may be multiple.

For a case where the chip is configured to implement the functions of the terminal in the embodiments of the present disclosure (such as the first terminal in the aforementioned method embodiments):
The processor 801 is configured to determine the first terminal as a responding terminal, and the responding terminal is a target terminal of a shared COT; the processor 801 is also configured to determine a second terminal as a target receiving terminal of the data packet in an LCP procedure, in which the second terminal is an initiating terminal for the shared COT; and the interface 802 is configured to send the data packet to the second terminal using the shared COT.

In a possible implementation, the interface 802 is further configured to receive SCI sent by the second terminal, the SCI being used to carry shared COT indication information.

The processor 801 is specifically configured to determine a target address indicated by the SCI and/or a target terminal identifier indicated by the shared COT indication information, and to determine the first terminal as the responding terminal according to the target address indicated by the SCI and/or the target terminal identifier indicated by the shared COT indication information.

In a possible implementation, the processor 801 is specifically configured to: determine the first terminal as the responding terminal, in a case that a unicast connection exists between the first terminal and the second terminal, and the target address indicated by the SCI is a layer 2 address of the first terminal.

In another possible implementation, the processor 801 is specifically configured to: determine that the first terminal is the responding terminal, in response to a multicast service being performed between the first terminal and the second terminal, the target address indicated by the SCI being a layer 2 address associated with the multicast service, and/or the target terminal identifier indicated by the shared COT indication information being the same as a terminal identifier of the first terminal.

In another possible implementation, the processor 801 is specifically configured to: determine that the first terminal is the responding terminal, in response to a broadcast service being performed between the first terminal and the second terminal, the target address indicated by the SCI being a layer 2 address associated with the broadcast service, and/or the target terminal identifier indicated by the shared COT indication information being the same as a terminal identifier of the first terminal.

In an implementation, the processor 801 is specifically configured to: a layer 2 address of the second terminal as a target address of the data packet in the LCP procedure, in which a service type associated with the data packet is unicast, and a CAPC of the data packet is less than or equal to a CAPC indicated by shared COT indication information.

**In** an implementation, the processor 801 is specifically configured to: determine an address associated with a multicast service as a target address of the data packet in the LCP procedure, in which a service type associated with the data packet is multicast, the second terminal is a receiving terminal of the multicast service, and a CAPC of the data packet is less than or equal to a CAPC indicated by shared COT indication information.

In an implementation, the processor 801 is specifically configured to: determine an address associated with a broadcast service as a target address of the data packet in the LCP procedure, in which a service type associated with the data packet is broadcast, the second terminal is a receiving terminal of the broadcast service, and a CAPC of the data packet is less than or equal to a CAPC indicated by shared COT indication information.

In an implementation, the processor 801 is further configured to: select an LCH belonging to the target address and having a CAPC less than or equal to the CAPC indicated by the shared COT indication information in the LCP procedure.

For a case where the chip is used to implement the functions of the terminal in the embodiments of the present disclosure (such as the second terminal in the aforementioned method embodiments):

The interface 802 is configured to receive a data packet sent by a first terminal using a shared COT; in which the second terminal is an initiating terminal for the shared COT, the first terminal is a responding terminal for the shared COT, and the responding terminal is a target terminal of the shared COT; and a target receiving terminal of the data packet is the second terminal.

In an implementation, the interface 802 is further configured to: send SCI to the first terminal, SCI being used to carry shared COT indication information, in which the SCI and/or the shared COT indication information indicates that the first terminal is the responding terminal, and the shared COT indication information also indicates a CAPC.

Optionally, the chip further includes a memory 803, which is configured to store necessary computer programs and data.

Those skilled in the art can also understand that the various illustrative logical blocks and steps listed in the embodiments of the present disclosure can be implemented through electronic hardware, computer software, or a combination of the two. Whether such functionality is implemented through hardware or software depends on the specific application and the design requirements of the entire system. Those skilled in the art may use various methods to implement the described functions for each specific application, but such implementation should not be understood as exceeding the scope of protection of the embodiments of the present disclosure.

The embodiments of the present disclosure also provide a system for determining a sidelink duration, which includes the communication apparatus as the terminal (such as the first terminal in the aforementioned method embodiments) and the communication apparatus as the terminal (such as the second terminal in the aforementioned method embodiments) in the embodiment of FIG. 6, or the system includes the communication apparatus as the terminal (such as the first terminal in the aforementioned method embodiments) and the communication apparatus as the terminal (such as the second terminal in the aforementioned method embodiments) in the embodiment of FIG. 7.

The present disclosure also provides a readable storage medium having stored instructions, which implement the functions of any of the above method embodiments when executed by a computer.

The present disclosure also provides a computer program product, which implements the functions of any of the above method embodiments when executed by a computer.

In the above embodiments, all or part of them may be implemented by software, hardware, firmware or any their combination. When implemented using software, all or part of the implementation may be in the form of a computer program product. The computer program product includes one or more computer programs. When the computer program is loaded and executed on a computer, the process or function described in the embodiments of the present disclosure is generated in whole or in part. The computer may be a general purpose computer, a special purpose computer, a computer network, or other programmable device. The computer program may be stored in a computer-readable storage medium or transmitted from one computer-readable storage medium to another computer-readable storage medium. For example, the computer program may be transmitted from one website, computer, server, or data center to another website, computer, server, or data center via wired (e.g., coaxial cable, optical fiber, digital subscriber line (DSL)) or wireless (e.g., infrared, wireless, microwave, etc.) means. The computer-readable storage medium may be any available medium that may be accessed by a computer or a data storage device such as a server or a data center that includes one or more available media. The available medium may be a magnetic medium (e.g., a floppy disk, a hard disk, a magnetic tape), an optical medium (e.g., a high-density digital video disc (DVD)), or a semiconductor medium (e.g., a solid state disk (SSD)).

Those skilled in the art will understand that the various numerical numbers such as first and second involved in the present disclosure are only for the convenience of description and are not used to limit the scope of the embodiments of the present disclosure, and also indicate the order of precedence.

At least one in the present disclosure may also be described as one or more, and a plurality may be two, three, four or more, which is not limited in the present disclosure. In the embodiments of the present disclosure, for a type of technical feature, the technical features in the type of technical feature are distinguished by "first", "second", "third", "A", "B", "C" and "D", and there is no order of precedence or size between the technical features described by "first", "second", "third", "A", "B", "C" and "D".

The corresponding relationships shown in the tables in the present disclosure may be configured or predefined. The values of the information in each table are only examples and may be configured to other values, which are not limited by the present disclosure. When configuring the correspondence between information and parameters, it is not necessarily required to configure all the correspondences illustrated in the tables. For example, in the tables in the present disclosure, the corresponding relationships shown in certain rows may not be configured. For another example, appropriate deformation adjustments may be made based on the above table, such as splitting, merging, etc. The names of the parameters indicated in the titles of the above tables may also be other names understandable to the communication apparatus, and the values or representations of the parameters may also be other values or representations understandable to the communication apparatus. When implementing the above tables, other data structures may also be used, such as arrays, queues, containers, stacks, linear lists, pointers, linked lists, trees, graphs, structures, classes, heaps, hash tables, or the like.

The predefined in the present disclosure may be understood as defined, pre-defined, stored, pre-stored, pre-negotiated, pre-configured, solidified, or pre-burned.

Those skilled in the art will appreciate that the units and algorithm steps of each example described in conjunction with the embodiments disclosed here can be implemented by electronic hardware, or a combination of computer software and electronic hardware. Whether these functions are performed in hardware or software depends on the specific application and design constraint of the technical solution. Those skilled in the art may use different methods to implement the described functions for each specific application, but such implementation should not be considered to be beyond the scope of the present disclosure.

Those skilled in the art will clearly understand that, for the convenience and brevity of description, for the specific working processes of the systems, devices and units described above reference can be made to the corresponding processes in the aforementioned method embodiments and details will not be repeated here.

The above description describes only specific embodiments of the present disclosure, but the protection scope of the present disclosure is not limited thereto. Any technician familiar with the technical field can easily think of changes or replacements within the technical scope disclosed in the present disclosure, and they should all be covered by the protection scope of the present disclosure. Therefore, the protection scope of the present disclosure should be based on the protection scope of the claims.

## Claims

1. A sidelink transmission method, performed by a first terminal, comprising:
determining the first terminal as a responding terminal for a shared channel occupancy time (COT);
determining a second terminal as a target receiving terminal of a data packet in a logical channel prioritization (LCP) procedure, wherein the second terminal is an initiating terminal for the shared COT; and
sending the data packet to the second terminal using the shared COT.

2. The method according to claim 1, wherein determining the first terminal as the responding terminal comprises:
receiving sidelink control information (SCI) sent by the second terminal, the SCI being used to carry shared COT indication information;
determining a target address indicated by the SCI, and/or a target terminal identifier indicated by the shared COT indication information; and
determining the first terminal as the responding terminal according to the target address indicated by the SCI and/or the target terminal identifier indicated by the shared COT indication information.

3. The method according to claim 2, wherein determining the first terminal as the responding terminal according to the target address indicated by the SCI and/or the target terminal identifier indicated by the shared COT indication information comprises:
determining the first terminal as the responding terminal, in a case that a unicast connection exists between the first terminal and the second terminal, and the target address indicated by the SCI is a layer 2 address of the first terminal.

4. The method according to claim 2, wherein determining the first terminal as the responding terminal according to the target address indicated by the SCI and/or the target terminal identifier indicated by the shared COT indication information comprises:
determining the first terminal as the responding terminal, in response to a multicast service being performed between the first terminal and the second terminal, the target address indicated by the SCI being a layer 2 address associated with the multicast service, and/or the target terminal identifier indicated by the shared COT indication information being the same as a terminal identifier of the first terminal.

5. The method according to claim 2, wherein determining the first terminal as the responding terminal according to the target address indicated by the SCI and/or the target terminal identifier indicated by the shared COT indication information comprises:
determining the first terminal as the responding terminal, in response to a broadcast service being performed between the first terminal and the second terminal, the target address indicated by the SCI being a layer 2 address associated with the broadcast service, and/or the target terminal identifier indicated by the shared COT indication information being the same as a terminal identifier of the first terminal.

6. The method according to claim 1, wherein determining the second terminal as the target receiving terminal of the data packet in the LCP procedure comprises:
determining a layer 2 address of the second terminal as a target address of the data packet in the LCP procedure, wherein a service type associated with the data packet is unicast, and a channel access priority class (CAPC) of the data packet is less than or equal to a CAPC indicated by shared COT indication information.

7. The method according to claim 1, wherein determining the second terminal as the target receiving terminal of the data packet in the LCP procedure comprises:
determining an address associated with a multicast service as a target address of the data packet in the LCP procedure, wherein a service type associated with the data packet is multicast, the second terminal is a receiving terminal of the multicast service, and a CAPC of the data packet is less than or equal to a CAPC indicated by shared COT indication information.

8. The method according to claim 1, wherein determining the second terminal as the target receiving terminal of the data packet in the LCP procedure comprises:
determining an address associated with a broadcast service as a target address of the data packet in the LCP procedure, wherein a service type associated with the data packet is broadcast, the second terminal is a receiving terminal of the broadcast service, and a CAPC of the data packet is less than or equal to a CAPC indicated by shared COT indication information.

9. The method according to any one of claims 6 to 8, wherein determining the second terminal as the target receiving terminal of the data packet in the LCP procedure further comprises:
selecting a logical channel (LCH) belonging to the target address and having a CAPC less than or equal to the CAPC indicated by the shared COT indication information in the LCP procedure.

10. A sidelink transmission method, performed by a second terminal, comprising:
receiving a data packet sent by a first terminal using a shared channel occupancy time (COT), wherein the second terminal is an initiating terminal for the shared COT and the first terminal is a responding terminal for the shared COT.

11. The method according to claim 10, further comprising:
sending sidelink control information (SCI) to the first terminal, the SCI being used to carry shared COT indication information, wherein the SCI and/or the shared COT indication information indicates that the first terminal is the responding terminal, and the shared COT indication information also indicates a channel access priority class (CAPC).

12. A communication apparatus, configured in a first terminal, comprising:
a processing module, configured to determine the first terminal as a responding terminal for a shared channel occupancy time (COT),
the processing module being further configured to determine a second terminal as a target receiving terminal of a data packet in a logical channel prioritization (LCP) procedure, wherein the second terminal is an initiating terminal for the shared COT; and
a transceiver module, configured to send the data packet to the second terminal using the shared COT.

13. A communication apparatus, configured in a second terminal, comprising:
a transceiver module, configured to receive a data packet sent by a first terminal via a shared channel occupancy time (COT), wherein the second terminal is an initiating terminal for the shared COT, and the first terminal is a responding terminal for the shared COT.

14. A communication apparatus, comprising a processor and a memory, wherein the memory stores a computer program, and the processor executes the computer program stored in the memory to cause the device to perform the method according to any one of claims 1 to 9.

15. A communication apparatus, comprising a processor and a memory, wherein the memory stores a computer program, and the processor executes the computer program stored in the memory to cause the device to perform the method according to claim 10 or 11.

16. A computer-readable storage medium configured to store instructions, wherein when the instructions are executed, the method according to any one of claims 1 to 9 is implemented.

17. A computer-readable storage medium configured to store instructions, wherein when the instructions are executed, the method according to claim 10 or 11 is implemented.
